# EUROPEAN PATENT APPLICATION

(11) **EP 3 584 677 A1**
(43) Date of publication of application: **25.12.2019**
(21) Application number: 18763969.5
(22) Date of filing: 09.03.2018
(51) Int. Cl.: G06F 1/32

(54) **METHOD AND DEVICE FOR CONTROLLING MOBILE TERMINAL, AND MOBILE TERMINAL**

(30) Priority: 10.03.2017 CN 201710142958
(71) Applicant: GUANGDONG OPPO MOBILE TELECOMMUNICATIONS CORP., LTD., Wusha, Chang'an Dongguan, Guangdong 523860 (CN)
(72) Inventor: PENG, Deliang, Dongguan Guangdong 523860 (CN); YI, Yongpeng, Dongguan Guangdong 523860 (CN); GOU, Shengjun, Dongguan Guangdong 523860 (CN); YUAN, Xiaori, Dongguan Guangdong 523860 (CN); GAN, Gaoting, Dongguan Guangdong 523860 (CN); ZHENG, Zhiyong, Dongguan Guangdong 523860 (CN); YANG, Hai, Dongguan Guangdong 523860 (CN)
(74) Representative: Manitz Finsterwald Patent- und Rechtsanwaltspartnerschaft mbB
(86) International application number: PCT/CN2018/078565
(87) International publication number: WO 2018/161958

(57) **Abstract**

A method and device for controlling a mobile terminal, and a mobile terminal are provided. The method includes the following. An input operation of a user on a screen of the mobile terminal is received. An operation area is determined according to a position of the input operation on the screen. Power consumption of a target area other than the operation area is reduced, where reducing the power consumption of the target area includes reducing an image resolution in the target area or reducing power consumption of layers corresponding to the target area.

## Description

### TECHNICAL FIELD

This disclosure relates to the technical field of mobile terminals, and more particularly to a method and device for controlling a mobile terminal, and a mobile terminal.

### BACKGROUND

With the rapid development of mobile terminal technology, a display screen of a mobile terminal increases in size constantly, applications installed and functions that can be realized are more and more diversified, and a user may spend a lot of time every day to use the mobile terminal. Therefore, power consumption of the mobile terminal is an important indicator for measuring the performance of the mobile terminal.

Control schemes of the mobile terminal such as display and playback have a great influence on the power consumption of the mobile terminal. The mobile terminal has a problem of high power consumption. Therefore, the control schemes of the mobile terminal needs to be improved.

### SUMMARY

The following is a summary of subjects of the detailed description, and this summary is not intended to limit the scope of the claims.

Implementations of the present disclosure provide a method and device for controlling a mobile terminal, and a mobile terminal, which can optimize control schemes of the mobile terminal.

According to implementations of the present disclosure, a method for controlling a mobile terminal is provided. The method includes the following. An input operation of a user on a screen of the mobile terminal is received. An operation area is determined according to a position of the input operation on the screen. Power consumption of a target area other than the operation area is reduced, where reducing the power consumption of the target area includes reducing an image resolution in the target area or reducing power consumption of layers corresponding to the target area.

According to implementations of the present disclosure, a device for controlling a mobile terminal is provided. The device includes an input-operation receiving module, an operation-area determining module, and a processing module. The input-operation receiving module is configured to receive an input operation of a user on a screen of the mobile terminal. The operation-area determining module is configured to determine an operation area according to a position of the input operation on the screen. The processing module is configured to reduce power consumption of a target area other than the operation area, where reducing the power consumption of the target area includes reducing an image resolution in the target area or reducing power consumption of layers corresponding to the target area.

According to implementations of the present disclosure, a mobile terminal is provided. The mobile terminal includes a memory, a processor, and computer programs stored in the memory and configured to be executed by the processor. The computer programs, when executed by the processor, being operable with the processor to: receive an input operation of a user on a screen of the mobile terminal; determine an operation area according to a position of the input operation on the screen; and reduce power consumption of a target area other than the operation area, where reducing the power consumption of the target area includes reducing an image resolution in the target area or reducing power consumption of layers corresponding to the target area.

According to implementations of the present disclosure, a computer readable storage medium is further provided. The computer readable storage medium is configured to store computer executable instructions which, when executed, are operable to execute any of the above methods.

According to the schemes for controlling a mobile terminal provided in the implementations of the present disclosure, the power consumption of the target area can be selectively reduced according to the input operation of the user, thereby reducing system power consumption of the mobile terminal.

Other aspects will become apparent upon reading and understanding the drawings and the detailed description.

### BRIEF DESCRIPTION OF THE DRAWINGS

FIG. 1 is a schematic flow chart illustrating a method for controlling a mobile terminal according to an implementation of the present disclosure.
FIG. 2 is a schematic diagram illustrating a display interface according to an implementation of the present disclosure.
FIG. 3 is a schematic diagram illustrating a display interface according to another implementation of the present disclosure.
FIG. 4 is a schematic diagram illustrating a display interface according to yet another implementation of the present disclosure.
FIG. 5 is a schematic diagram illustrating a display process according to an implementation of the present disclosure.
FIG. 6 is a schematic diagram illustrating a synchronous display refresh mechanism according to an implementation of the present disclosure.
FIG. 7 is a schematic flow chart illustrating a method for controlling a mobile terminal according to another implementation of the present disclosure.
FIG. 8 is a schematic diagram illustrating a display interface according to yet another implementation of the present disclosure.
FIG. 9 is a block diagram illustrating a device for controlling a mobile terminal according to an implementation of the present disclosure.
FIG. 10 is a schematic structural diagram illustrating a mobile terminal according to an implementation of the present disclosure.

### DETAILED DESCRIPTION

Before discussing the exemplary implementations in detail, it should be mentioned that some exemplary implementations are described as processes or methods illustrated by flowcharts. In the flowcharts, although steps are depicted as being processed sequentially, some of the steps may be performed in parallel, concurrently, or simultaneously. In addition, the order of the steps can be rearranged without conflict. The process may be terminated when finishing an operation, but the process may include additional steps that are not illustrated in the drawings. The process may correspond to a method, a function, a procedure, a subroutine, a subprogram, and the like.

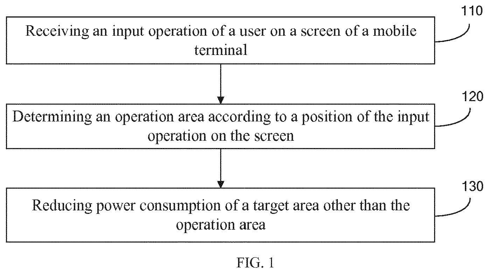

FIG. 1 is a schematic flow chart illustrating a method for controlling a mobile terminal according to an implementation of the present disclosure. The method may be executed by a device for controlling a mobile terminal, where the device may be implemented with software, hardware, or a combination of software and hardware, and may be integrated in the mobile terminal. As illustrated in FIG. 1, the method includes the following.

At block 110, an input operation of a user on a screen of the mobile terminal is received.

For example, the mobile terminal in this implementation may be a device having a display screen, such as a mobile phone, a smart watch, a tablet computer, a game machine, a personal digital assistant, and a digital multimedia player.

In an implementation, the input operation may include a touch input operation or an eye-focus input operation. In the case that the input operation is the touch input operation, the screen of the mobile terminal is a touch screen for example, and the touch input operation of the user is received via the touch screen. In the case that the input operation is the eye-focus input operation, the mobile terminal may include a camera (e.g., a front camera or a rotatable camera disposed at a front surface of the mobile terminal) disposed at the top of the screen of the mobile terminal. The camera is configured to capture a face image. A focus position of user's eyes on the screen is determined by recognizing positions of eyeballs. In this way, the eye-focus input operation of the user is received. The input manner may be applicable to a mobile terminal having a large screen for example.

At block 120, an operation area is determined according to a position of the input operation on the screen.

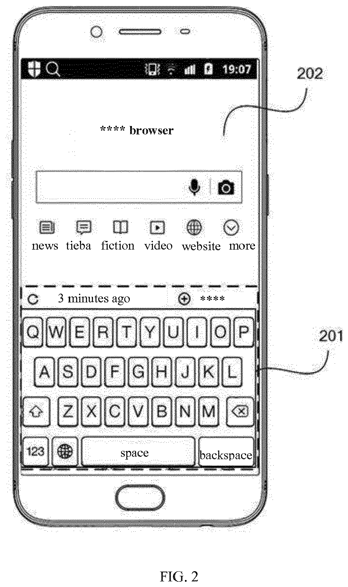

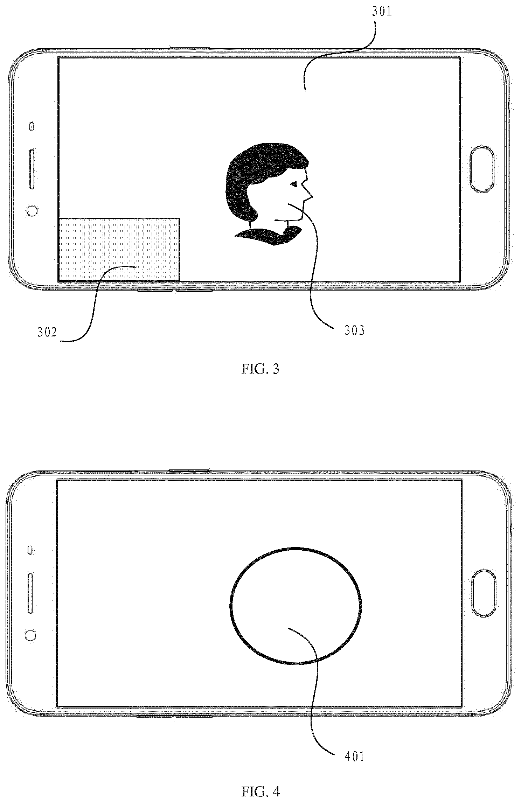

For example, the position of the input operation of the user on the screen can be understood as a position that the user is interested in. As an example, FIG. 2 is a schematic diagram illustrating a display interface according to an implementation of the present disclosure. When characters are input via an input method control 201, the input operation is performed on a display area of the input method control 201 on the screen (at the bottom of the screen illustrated in FIG. 2). At this point, the user may concentrate on contents displayed in this area without paying attention to other contents (e.g., a web page 202 illustrated in FIG. 2). As such, an area corresponding to the input method control 201 can be determined as the operation area. As another example, FIG. 3 is a schematic diagram illustrating a display interface according to another implementation of the present disclosure. When a user watches a movie using a video playback application, assuming that there is an advertisement 302 on the screen in addition to a movie image 301, as illustrated in FIG. 3, the advertisement 302 appears in the lower left corner of the screen, and eyes of the user focus on an area where the movie image 301 locates instead of an area where the advertisement 302 locates. For instance, if the size of the screen of the mobile terminal is relatively large, a specific position of the movie image where the eyes of the user focus can also be recognized, such as a position corresponding to a character 303 in the movie image. An area corresponding to the movie image 301 or an area corresponding to the character 303 may be determined as the operation area, which may be implemented through related techniques such as image edge detection. As another example, for a game application, similar to the video playback application, when a user plays a game, user's attention is usually focused on an object (such as a character, an animal, or an item) operated by the user, and a background (such as grass, trees, buildings, etc.) in a game interface is not concerned. As such, by recognizing an operation object operated by the user according to a position where the eyes of the user are focused, an area corresponding to the operation object can be determined as the operation area.

In an implementation, the method may include the following. A center position (or referred to as an operation center) of the input operation on the screen is determined. An operation object is determined according to coordinates of the center position on the screen. The operation area is determined according to an area where the operation object locates. One of advantages of this implementation is that the operating area can be accurately determined. Similar to the above example, in FIG. 2, when characters are input through a touch operation of the user, an operation center is a center position of a touch area when the user touches the screen with a finger, and coordinates of the operation center fall in a coordinate range of the area where the input method control 201 locates. In this case, the input method control 201 is determined as the operation object, and the area where the input method control 201 locates is determined as the operation area. For another example, in FIG. 3, a focus position of the eyes of the user is the operation center, and the coordinates of the operation center fall in a coordinate range of the area where the movie image 301 locates. As such, the movie image 301 is determined as the operation object, and the area where the movie image 301 locates is determined as the operation area.

For example, if the input operation is a touch input operation, the method may further include the following. The operation area is determined to be a closed area, where the closed area is formed by an operation trajectory of the touch input operation on the screen. FIG. 4 is a schematic diagram illustrating a display interface according to yet another implementation of the present disclosure. As illustrated in FIG. 4, an area that the user is interested in can be circled by moving a finger of the user on the screen according to user's own preference. For example, by pressing the screen with a finger and sliding on the screen, a sliding trajectory has a circular shape 401 which defines the operating area inside. An advantage of such a setting is that the operate area can be accurately determined by enhancing an interaction between the mobile terminal and the user.

In an implementation, if the input operation is a touch input operation, the method may further include the following. The operation area is determined to be an area other than the closed area, where the closed area is formed by the operation trajectory of the touch input operation on the screen. Compared with the foregoing manner, this manner can accurately determine the operation area by enhancing the interaction between the mobile terminal and the user, and can also be applicable to a case where an area that the user is not interested in is smaller than an area that the user is interested in.

The above two manners can be set by default or selected by the user. Before the user starts to circle an area, the user may be prompted, such as "please circle your area of interest" or "please circle an area where a power reduction operation needs to be performed".

At block 130, power consumption of a target area other than the operation area is reduced.

Reducing the power consumption of the target area includes reducing an image resolution in the target area or reducing power consumption of layers corresponding to the target area.

For example, the target area may include all or part of areas on the screen other than the operation area. For example, according to system settings or user settings, a preset area of the screen can be set to be an area that cannot be determined as the target area. In this case, the target area is all the areas on the screen other than the operation area and the preset area. The preset area may vary according to a specific display scenario, where display scenarios can be distinguished according to factors such as currently running applications (or process identifiers of the applications), sensing data acquired by a sensor, touch data, and properties of layers of applications.

In this implementation, an operating system loaded in the mobile terminal may be an Android® system, a windows phone (WP) operating system, a Linux system, an iphone operating system (IOS), or the like. For ease of illustration, in the following, this implementation will be described in conjunction with the Android® system.

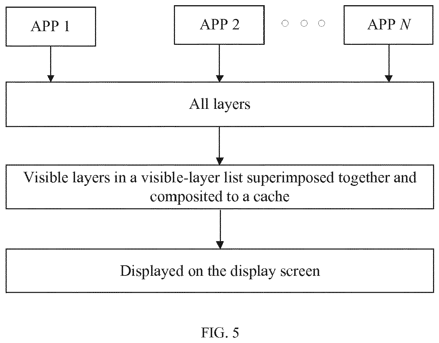

The Android® system is taken as an example to briefly describe a process from generation of a to-be-displayed image to display of the to-be-displayed image in the Android® system. FIG. 5 is a schematic diagram illustrating a display process according to an implementation of the present disclosure.

First, in an application layer, each application (hereinafter, "APP" for short) contains one or more layers, and each of multiple applications APP 1, APP 2...APP *N* performs a layer-rendering operation (i.e., rendering an image on a layer) separately according to application design conditions of each of the multiple applications (generally, determined by a corresponding Android® package (APK)). After the rendering operation, each application sends one or more layers rendered by each application to a layer composite module (e.g., surface flinger) that performs a layer composite operation.

Then, in a framework layer, a layer list containing all layers (including visible and invisible layers) is generated, and the layer list is defined as *ListAll.* The layer composite module selects the visible layers from the *ListAll* to form a visible-layer list, and the visible-layer list is defined as *DisplayList.* Then, the layer composite module finds an unoccupied frame buffer (FB) from three reusable frame buffers in the Android® system. In the unoccupied FB, according to application configuration information, for example, which layer should be bottomed, which layer should be topped, which area is visible and which area is transparent, etc., by means of a composite operation, the layers contained in the *DisplayList* are superimposed to obtain a final to-be-displayed image.

In a kernel layer, the to-be-displayed image is transmitted to a display hardware, where the display hardware includes a controller and a display screen, so that the to-be-displayed image is finally displayed on the display screen. The type of the display screen is, for example, a liquid crystal display (LCD).

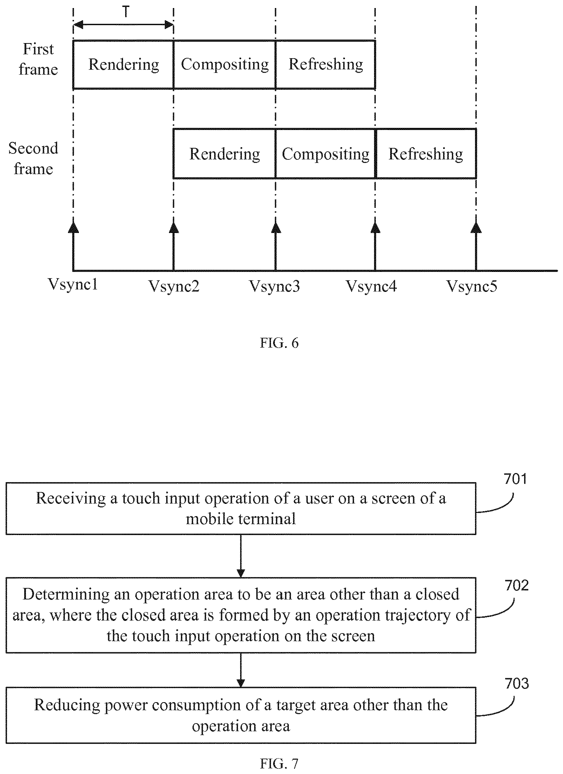

In addition, during a display refresh process, for the Android® system, a vertical synchronization (Vsync) refresh mechanism is introduced. FIG. 6 is a schematic diagram illustrating a Vsync display refresh mechanism according to an implementation of the present disclosure. The Vsync refresh mechanism essentially refers to inserting a "heartbeat" (i.e., a system Vsync signal) throughout a display flow, and the system Vsync signal is sent by the controller to a central processing unit (CPU) to generate a Vsync interrupt, so that each layer-rendering operation and each layer composite operation need to be completed according to the system Vsync signal, thereby incorporating key operations of the whole display process into a unified management mechanism of the Vsync, where the key operations may include a layer-rendering operation and a layer composite operation. The frequency of the Vsync signal is usually 60 Hz. As illustrated in FIG. 6, assuming that the cycle of the Vsync signal is *T,* regardless of transmission delay of the Vsync signal, after a first Vsync signal *Vsync1* (synchronization) reaches the CPU, the CPU forwards the first Vsync signal *Vsync1* to each of multiple applications, each of the multiple application starts to perform a rendering operation in response to a user operation such as a touch slide operation on the display screen. Multiple layers rendered by the multiple applications are obtained after the rendering operation. After a second Vsync signal *Vsync2* (synchronization) reaches the CPU, the CPU forwards the second Vsync signal *Vsync2* to the layer composite module. The layer composite module starts to perform a layer composite operation, and composites the multiple layers rendered by the multiple applications to generate (or compose) a to-be-displayed image. After a third Vsync signal *Vsync3* reaches the CPU, the Android® system starts to perform a display refresh operation and finally displays the to-be-displayed image on the display screen. As stated above, the applications, the layer composite module, and the display screen receive Vsync signals of a same frequency, which is a fixed frequency set in advance.

In a layer-rendering process, a layer composite process, and a layer refresh display process of the mobile terminal, three kinds of frame rates are involved, which are a rendering frame rate, a composite frame rate, and a refresh rate, respectively.

The rendering frame rate is used for triggering the layer composite module to perform the composite operation after each application finishes the layer-rendering operation. The rendering frame rate can also be understood as frames of layers rendered per unit time (e.g., one second). The rendering frame rate includes a rendering frame rate of an application and a rendering frame rate of a layer. There may be more than one application currently running in the Android® system, and each application may include multiple layers. For example, a video player application generally includes three layers: one layer (defined as *U1*) for displaying video contents, and two SurfaceView-type layers, where one layer (defined as *U2*) is set to display contents of bullet-screen, and another layer (defined as *U3*) is set to display user-interface (UI) controls (e.g., a playback progress bar, a volume control bar, and various control buttons, etc.) and display advertisements. The rendering frame rate of the application refers to the number of times that each application performs the rendering operation per unit time, where one or more layers may be rendered when performing a rendering operation. The rendering frame rate of the layer refers to the number of times that a layer of the same number or name (e.g., *U1, U2,* or *U3*) is triggered to be rendered per unit time.

The composite frame rate is used for compositing layers rendered by respective applications to a to-be-displayed image. The composite frame rate can also be understood as frames of an image composited per unit time.

The refresh rate refers to a frame rate according to which an image displayed on the display screen of the mobile terminal is refreshed. The display screen may be refreshed at a refresh rate of 60 Hz.

As an implementation, a processing manner of reducing the image resolution in the target area may be applicable to a case where an area is directly divided only according to a display image, regardless of whether the operation area and the target area are in a same layer. Reducing the image resolution in the target area may be implemented in a layer-rendering stage or a layer composite stage. In an implementation, a coordinate range of the target area in a display image is sent to a layer composite module. According to the coordinate range of the target area, respective sub-coordinate ranges of the target area in multiple layers are calculated via the layer composite module. Each of the sub-coordinate ranges is sent to a corresponding application via the layer composite module, whereby respective applications reduce the image resolution in the target area according to respective sub-coordinate ranges when rendering the multiple layers corresponding to the target area. In this way, a rendering process can be simplified during a layer-rendering stage, thereby saving rendering time and reducing power consumption. In another implementation, the coordinate range of the target area in the display image is sent to the layer composite module, and the image resolution in the target area can be reduced in the layer composite process according to the coordinate range of the target area. In this way, the composite process can be simplified during a layer composite stage, and so composite time can be saved and power consumption can be reduced. The image resolution can be reduced by means of related schemes of image processing.

The main difference between reducing the power consumption of the layers corresponding to the target area and reducing the image resolution in the target area described above is the following. A resolution of a part of an image in a same layer can be reduced when reducing the image resolution in the target area. However, when reducing the power consumption of one layer corresponding to the target area, the power consumption of the entire layer is reduced.

In an implementation, reducing the power consumption of the layers corresponding to the target area may include the following processing manners. In a first processing manner, a rendering frame rate of each of the layers corresponding to the target area is reduced. In a second processing manner, a resolution of each of the layers corresponding to the target area is reduced. In a third processing manner, the layers corresponding to the target area are removed from a set of layers to-be-composited (e.g., the *DisplayList*). In a fourth processing manner, play volume of each of the layers corresponding to the target area is decreased.

For the first processing manner, as an implementation, the rendering frame rate of each of the layers can be reduced by lowering the frequency of a reference signal (e.g., a Vsync signal) for layer rendering. At this time, the frequency of a Vsync signal for rendering the layers corresponding to the target area is reduced during a layer-rendering process, and the frequency of a Vsync signal during a layer composite process and the frequency of a Vsync signal during a refresh display process remain unchanged. For example, the frequency of the Vsync signal during the layer-rendering process, the frequency of the Vsync signal during the layer composite process, and the frequency of the Vsync signal during the refresh display process are all 60 Hz, and when the frequency of the Vsync signal for rendering the layers corresponding to the target area is reduced from 60 Hz to 50Hz, the frequency of the Vsync signal during the layer composite process and the frequency of the Vsync signal during the refresh display process are still 60Hz. In addition, the rendering frame rate of each of the layers can also be reduced by changing a response mechanism of a layer-rendering operation in response to reference signals. As an example, make a response to a (*2n*+*1*)^{th} signal received, and for a (*2n*)^{th} signal received, no response is made. As another example, take *n* signals (e.g., five signals) as a group, make a response to signals having a first type of preset number (e.g., 1, 2, 4, 5) in each group, and for signals having a second type of preset number (e.g., 4) in each group, no response is made.

For the second processing manner, reducing the resolution of each of the layers corresponding to the target area refers to reducing an image resolution of each of the layers corresponding to the target area, which can be implemented in the layer-rendering stage.

For the third processing manner, the operation of removing the layers corresponding to the target area from the set of layers to-be-composited may be implemented via a layer composite module. For instance, a coordinate range of the target area in a display image is sent to the layer composite module. The layer composite module identifies identifiers (such as a name or a number) of the layers corresponding to the target area according to the coordinate range of the target area, and removes corresponding layers from the set of layers to-be-composited according to the identifiers. As such, contents of the layers corresponding to the target area are not contained in a composite image to-be-displayed.

For the fourth processing manner, as an implementation, the layers corresponding to the target area may be layers corresponding to a video advertisement or layers with a sound effect. In this situation, play volume of each of the layers corresponding to the target area can be decreased, and so power consumption of the mobile terminal can be reduced.

The above four types of power reduction processing manners may be combined with each other. For example, the first processing manner and the fourth processing manner are adopted simultaneously, the first processing manner and the second processing manner are adopted simultaneously, the first processing manner, the second processing manner, and the fourth processing manner are adopted simultaneously, or the like.

According to the method for controlling a mobile terminal provided in this implementation, the input operation of the user on the screen of the mobile terminal can be received, the operation area can be determined according to the position of the input operation on the screen, and the power consumption of the target area other than the operation area can be reduced, where reducing the power consumption of the target area includes reducing the image resolution in the target area or reducing the power consumption of the layers corresponding to the target area. By adopting the above technical solution, the power consumption of the target area can be selectively reduced according to the input operation of the user, thereby reducing system power consumption of the mobile terminal.

FIG. 7 is a schematic flow chart illustrating a method for controlling a mobile terminal according to another implementation of the present disclosure.

At block 701, a touch input operation of a user on a screen of a mobile terminal is received.

At block 702, an operation area is determined to be an area other than a closed area, where the closed area is formed by an operation trajectory of the touch input operation on the screen.

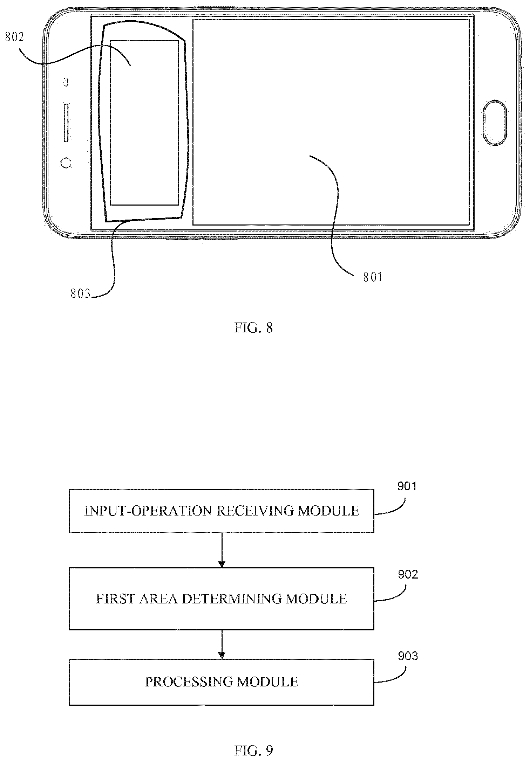

FIG. 8 is a schematic diagram illustrating a display interface according to yet another implementation of the present disclosure. Taken an application scenario of a game application A played as an example, assuming that a mobile terminal displays the game in a full-screen mode at current time, a game area 801 is an operation area of the user, and a background area 802 may include other images such as some trees, cartoon characters, and buildings, which are generally not attract user's attention during playing the game. Therefore, in order to reduce power consumption, the background area 802 can be circled to obtain a closed area 803, and an area other than the closed area 803 is determined as an area that the user is interested in, and so the area other than the closed area 803 is determined as the operation area.

At block 703, power consumption of a target area other than the operation area is reduced.

Reducing the power consumption of the target area includes reducing an image resolution in the target area or reducing power consumption of layers corresponding to the target area.

In an implementation, an area other than the operation area may be a closed area formed by an operation trajectory of the touch input operation on the screen.

The manner of reducing the power consumption of the target area may be selected according to a layer allocation strategy of each application. Similarly, taken the game application *A* as an example, if display contents of the game application *A* on the game area 801 and display contents of the game application *A* on the background area 802 are all rendered on a same layer, the image resolution in the target area can be reduced. If the display contents of the game application *A* on the game area 801 and the display contents of the game application *A* on the background area 802 are respectively rendered on different layers, the power consumption of the layers corresponding to the target area can be reduced, that is, power consumption of layers corresponding to the closed area 803 is reduced. For the specific processing, reference may be made to the related descriptions above, and it will not be described in further detail herein.

In this implementation, the area that the user is not interested in can be determined according to a circle selection operation on the screen, and power consumption of images or layers corresponding to the area that is not of interest can be reduced, thereby reducing power consumption of the mobile terminal and prolonging battery life.

FIG. 9 is a block diagram illustrating a device for controlling a mobile terminal according to an implementation of the present disclosure. The device can be implemented with at least one of software and hardware, and generally integrated in a mobile terminal. The mobile terminal may be controlled by executing the method for controlling the mobile terminal. As illustrated in FIG. 9, the device includes an input-operation receiving module 901, an operation-area determining module 902, and a processing module 903.

The input-operation receiving module 901 is configured to receive an input operation of a user on a screen of the mobile terminal.

The operation-area determining module 902 is configured to determine an operation area according to a position of the input operation on the screen.

The processing module 903 is configured to reduce power consumption of a target area other than the operation area, where reducing the power consumption of the target area includes reducing an image resolution in the target area or reducing power consumption of layers corresponding to the target area.

According to the device for controlling a mobile terminal of this implementation, the power consumption of the target area can be selectively reduced according to the input operation of the user, and so system power consumption of the mobile terminal can be reduced.

In an implementation, the power consumption of the layers corresponding to the target area is reduced as follows. A rendering frame rate of each of the layers corresponding to the target area is reduced. A resolution of each of the layers corresponding to the target area is reduced. The layers corresponding to the target area are removed from a set of layers to-be-composited. Play volume of each of the layers corresponding to the target area is decreased.

In an implementation, the input operation includes a touch input operation or an eye-focus input operation.

In an implementation, the operation-area determining module includes an operation-center determining unit, an operation-object determining unit, and an operation-area determining unit. The operation-center determining unit is configured to determine a center position of the input operation on the screen. The operation-object determining unit is configured to determine an operation object according to coordinates of the center position on the screen. The operation-area determining unit is configured to determine the operation area according to an area where the operation object locates.

In an implementation, the input operation is the touch input operation, the operation-area determining module is configured to: determine the operation area to be a closed area, where the closed area is formed by an operation trajectory of the touch input operation on the screen; or determine the operation area to be an area other than the closed area, where the closed area is formed by the operation trajectory of the touch input operation on the screen.

In an implementation, the image resolution in the target area are reduced as follows. A coordinate range of the target area in a display image is sent to a layer composite module. According to the coordinate range of the target area, respective sub-coordinate ranges of the target area in multiple layers are calculated via the layer composite module. Each of the sub-coordinate ranges is sent to a corresponding application via the layer composite module, whereby respective applications reduce the image resolution in target area according to respective sub-coordinate ranges when rendering the multiple layer corresponding to the target area. In another implementation, the image resolution in the target area are reduced as follows. The coordinate range of the target area in the display image is sent to the layer composite module. According to the coordinate range of the target area, the image resolution in the target area are reduced via the layer composite module in a layer composite process.

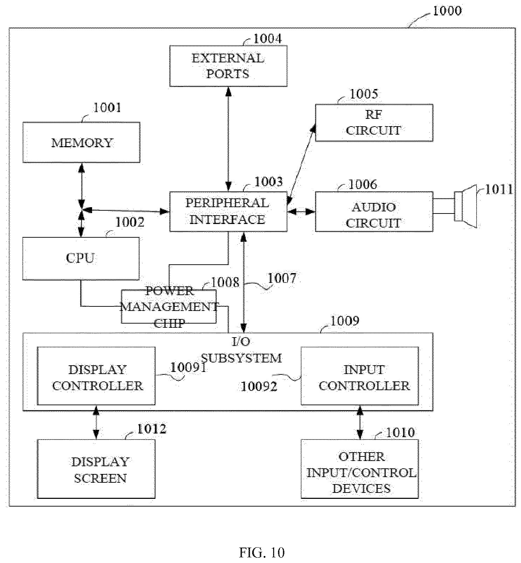

Implementations of the present disclosure provide a mobile terminal, the device for controlling a mobile terminal, as part of the mobile terminal, may be disposed in the mobile terminal. FIG. 10 is a schematic structural diagram illustrating a mobile terminal according to an implementation of the present disclosure. The mobile terminal may include a house (not illustrated), a memory 1001, a central processing unit (CPU) 1002 (also referred to as a processor, hereinafter, referred to as a CPU), and a circuit board (not illustrated), and a power supply circuit (not illustrated). The circuit board is disposed inside a space enclosed by the housing. The CPU 1002 and the memory 1001 are disposed on the circuit board. The power supply circuit is configured to supply power to multiple circuits or devices of the mobile terminal. The memory 1001 is configured to store executable program codes. The CPU 1002 is configured to run programs corresponding to the executable program codes by reading executable program codes stored in the memory 1001 to carry out the following operations. An input operation on a screen of the mobile terminal is received. An operation area is determined according to a position of the input operation on the screen. Power consumption of a target area other than the operation area is reduced, where reducing the power consumption of the target area includes reducing the image resolution in the target area or reducing power consumption of layers corresponding to the target area.

The mobile terminal further includes a peripheral interface 1003, a radio frequency (RF) circuit 1005, an audio circuit 1006, a speaker 1011, a power management chip 1008, an input/output (I/O) subsystem 1009, a touch screen 1012, other input/control devices 1010, and external ports 1004. These components communicate with each other via one or more communication buses or signal lines 1007.

It should be understood that the mobile terminal 1000 illustrated is merely one example of a mobile terminal, and the mobile terminal 1000 may have more or fewer components than those illustrated in the figures. For example, two or more components may be combined, or different component configurations can be adopted in the mobile terminal. The various components illustrated in the figures can be implemented in hardware, software, or a combination of hardware and software including one or more signal processing and/or one or more application specific integrated circuits.

The following describes a mobile terminal, which takes a mobile phone as an example.

The memory 1001 can be accessed by the CPU 1002, the peripheral interface 1003, and so on. The memory 1001 may include a high-speed random access memory and may further include a non-transitory memory such as one or more magnetic disk storage devices, flash memory devices, or other volatile solid-state storage devices.

The peripheral interface 1003 is configured to connect input and output peripherals of the device to CPU 1002 and memory 1001.

The I/O subsystem 1009 can be configured to connect the input and output peripherals on the device, such as the touch screen 1012 and other input/control devices 1010, to the peripheral interface 1003. The I/O subsystem 1009 may include a display controller 10091 and one or more input controllers 10092 configured to control other input/control devices 1010. One or more input controllers 10092 are configured to receive electrical signals from or send electrical signals to other input/control devices 1010, and where other input/control devices 1010 may include a physical button (a press button, a rocker button, etc.), a dial, a slide switch, a joystick, a click wheel. It should be noted that the input controller 10092 can be coupled with any of a keyboard, an infrared port, a USB interface, and a pointing device such as a mouse.

The touch screen 1012 is an input interface and an output interface between the mobile terminal and a user, and is configured to display a visual output to the user. The visual output may include graphics, text, icons, video, or the like.

The display controller 10091 in I/O subsystem 1009 is configured to receive electrical signals from or send electrical signals to touch screen 1012. The touch screen 1012 is configured to detect contact on the touch screen, and the display controller 10091 is configured to convert the contact detected into an interaction with a user interface object displayed on the touch screen 1012, that is, to realize human-computer interaction. The user interface object displayed on the touch screen 1012 may be an icon of a running game, an icon indicating connection to corresponding networks, and the like. It should be noted that the device may also include a light mouse, which is a touch sensitive surface that does not display a visual output, or an extension of a touch sensitive surface formed by the touch screen.

The RF circuit 1005 is configured to establish communication between the mobile phone and the wireless network (i.e., network side) and to transmit and receive data between the mobile phone and the wireless network, for example, transmit and receive short messages, emails, and the like. The RF circuit 1005 is configured to receive and transmit RF signals (which is also referred to as electromagnetic signals), to convert an electrical signal into an electromagnetic signal or convert an electromagnetic signal into an electrical signal, and to communicate with a communication network and other devices through the electromagnetic signals. The RF circuit 1005 may include known circuits for performing these functions, including but not limited to an antenna system, an RF transceiver, one or more amplifiers, a tuner, one or more oscillators, a digital signal processor, a coder-decoder (codec) chipset, a subscriber identity module (SIM), and so on.

The audio circuit 1006 is configured to receive audio data from the peripheral interface 1003, to convert the audio data into an electrical signal, and to transmit the electrical signal to the speaker 1011.

The speaker 1011 is configured to restore the voice signal received by the mobile phone from the wireless network via the RF circuit 1005 to sound and to play the sound to the user.

The power management chip 1008 is configured for power supply and power management of the hardware connected to the CPU 1002, the I/O subsystem, and the peripheral interface.

According to the mobile terminal provided in the implementations, the power consumption of the target area can be selectively reduced according to the input operation of the user, and so it is possible to save system power consumption of the mobile terminal.

The foregoing device for controlling a mobile terminal and the foregoing mobile terminal may execute methods for controlling a mobile terminal provided by any of the implementations of the present disclosure, and have function modules and advantageous effects for executing the methods. For technical details that are not described in detail in the above implementations, reference may be made to the method for controlling a mobile terminal of any of the above implementations.

### Industrial applicability

According to the method for controlling a mobile terminal of the present disclosure, the power consumption of the target area can be selectively reduced according to the input operation of the user, thereby reducing system power consumption of the mobile terminal.

## Claims

1. A method for controlling a mobile terminal, comprising:
receiving an input operation on a screen of the mobile terminal;
determining an operation area according to a position of the input operation on the screen; and
reducing power consumption of a target area other than the operation area, reducing the power consumption of the target area comprising reducing an image resolution in the target area or reducing power consumption of layers corresponding to the target area.

2. The method of claim 1, wherein reducing the power consumption of the layers corresponding to the target area comprises:
reducing a rendering frame rate of each of the layers corresponding to the target area;
reducing a resolution of each of the layers corresponding to the target area;
removing the layers corresponding to the target area from a set of layers to-be-composited; or
decreasing play volume of each of the layers corresponding to the target area.

3. The method of claim 1, wherein the input operation comprises a touch input operation or an eye-focus input operation.

4. The method of claim 3, wherein determining the operation area according to the position of the input operation on the screen comprises:
determining a center position of the input operation on the screen;
determining an operation object according to coordinates of the center position on the screen; and
determining the operation area according to an area where the operation object locates.

5. The method of claim 3, wherein the input operation is the touch input operation;
determining the operation area according to the position of the input operation on the screen comprises:
determining the operation area to be a closed area, wherein the closed area is formed by an operation trajectory of the touch input operation on the screen; or
determining the operation area to be an area other than the closed area, wherein the closed area is formed by the operation trajectory of the touch input operation on the screen.

6. The method of claim 1, wherein reducing the image resolution in the target area comprises:
sending a coordinate range of the target area in a display image to a layer composite module;
calculating, via the layer composite module, respective sub-coordinate ranges of the target area in a plurality of layers according to the coordinate range of the target area; and
sending, via the layer composite module, each of the sub-coordinate ranges to a corresponding application, whereby respective applications reduce the image resolution in the target area according to respective sub-coordinate ranges when rendering the plurality of layers corresponding to the target area;
or reducing the image resolution in the target area comprises:
sending the coordinate range of the target area in the display image to the layer composite module; and
reducing, via the layer composite module, the image resolution in the target area in a layer composite process according to the coordinate range of the target area.

7. A device for controlling a mobile terminal, comprising:
an input-operation receiving module, configured to receive an input operation on a screen of the mobile terminal;
an operation-area determining module, configured to determine an operation area according to a position of the input operation on the screen; and
a processing module, configured to reduce power consumption of a target area other than the operation area, reducing the power consumption of the target area comprising reducing an image resolution in the target area or reducing power consumption of layers corresponding to the target area.

8. The device of claim 7, wherein reducing the power consumption of the layers corresponding to the target area comprises:
reducing a rendering frame rate of each of the layers corresponding to the target area;
reducing a resolution of each of the layers corresponding to the target area;
removing the layers corresponding to the target area from a set of layers to-be-composited; or
decreasing play volume of each of the layers corresponding to the target area.

9. The device of claim 7, wherein the input operation comprises a touch input operation or an eye-focus input operation.

10. The device of claim 9, wherein the operation-area determining module comprises:
an operation-center determining unit, configured to determine a center position of the input operation on the screen;
an operation-object determining unit, configured to determine an operation object according to coordinates of the center position on the screen; and
an operation-area determining unit, configured to determine the operation area according to an area where the operation object locates.

11. The device of claim 9, wherein the input operation is the touch input operation;
the operation-area determining module is configured to:
determine the operation area to be a closed area, wherein the closed area is formed by an operation trajectory of the touch input operation on the screen; or
determine the operation area to be an area other than the closed area, wherein the closed area is formed by the operation trajectory of the touch input operation on the screen.

12. The device of claim 7, wherein reducing the image resolution in the target area comprises:
sending a coordinate range of the target area in a display image to a layer composite module;
calculating, via the layer composite module, respective sub-coordinate ranges of the target area in a plurality of layers according to the coordinate range of the target area; and
sending, via the layer composite module, each of the sub-coordinate ranges to a corresponding application, whereby respective applications reduce the image resolution in target area according to respective sub-coordinate ranges when rendering the plurality of layers corresponding to the target area;
or reducing the image resolution in the target area comprises:
sending the coordinate range of the target area in the display image to the layer composite module; and
reducing, via the layer composite module, the image resolution in the target area in a layer composite process according to the coordinate range of the target area.

13. A mobile terminal, comprising:
a memory;
a processor; and
computer programs, stored in the memory and configured to be executed by the processor;
the computer programs, when executed by the processor, being operable with the processor to:
receive an input operation of a user on a screen of the mobile terminal;
determine an operation area according to a position of the input operation on the screen; and
reduce power consumption of a target area other than the operation area, reducing the power consumption of the target area comprising reducing an image resolution in the target area or reducing power consumption of layers corresponding to the target area.

14. A computer readable storage medium, configured to store computer executable instructions which, when executed, are operable to execute the method of any of claims 1 to 6.
